# EUROPEAN PATENT APPLICATION

(11) **EP 2 826 699 A1**
(43) Date of publication of application: **21.01.2015**
(21) Application number: 13176838.4
(22) Date of filing: 17.07.2013
(51) Int. Cl.: B62J 6/00, B62J 6/02

(54) **A portable light for a bicycle**

(71) Applicant: Fast Field Industrial Limited, Kowloon Hong Kong (CN)
(72) Inventor: Zhang, David Yu Tai, Kowloon (CN)
(74) Representative: Verhorevoort, Kerry Linda

(57) **Abstract**

The present invention discloses a portable light which comprises a case; a PCB assembly comprising a powering source; a plurality of LEDs emitting light in different color which are installed on the PCB assembly and electrically connected to the powering source and arranged to emit light; and a lens disposed in the case for protecting the LEDs and enhancing the emitting of light through the case; and wherein the PCB assembly controls current supplied to the LEDs such that one of the LED is lighted in a stead mode or a flashing mode. The portable light of the invention can be easily operated to emit single color of light and can be easily operated to change other color of light in a steady mode or a flashing mode so as to alert other traffic to their presence on the road, especially in an emergent circumstance.

## Description

### Technical Field

The present invention generally relates to a field of LED illumination, and more particularly, to a novel portable light having LEDs.

### Background of the Invention

LED (light emitting diode) lights are commonly used for portable lighting source due to its own advantages like lower energy consumption and higher brightness. The portable light may assist a bicycle player to safely ride in a dark or dim condition.

WO2011/006209A discloses a portable light, which includes an LED hidden from the elements and uniquely used in combination with a lens and providing a unitary casing that can be attached without tools and results in a sealed unit with all electrical components including LED in a protective inner chassis and an outer overmoulded rubber providing a waterproof and shockproof casing creates an improved portable light that can be used in all weather. While the above invention discloses a portable light which can be operable in a constant mode and a non-continuous flashing mode, the portable light of the above invention only includes a single color in a flashing mode and cannot change other color of light to alert other traffic to their presence on the road, especially in an emergent circumstance.

Therefore, there is a need to improve the portable light in existing technology so that on the basis of prior art, if possible, a new portable light with a plurality of LEDs that can emit light in different color can be manufactured which, if desired, can alternatively emit different color of light in a steady mode or a flashing mode.

### Summary of the Invention

This invention responds to the above need of a new portable light, to provide an improved portable light based on prior art which not only has a plurality of LEDs emitting different color of light, such as white light, red light or green light, but also can be easily operable to emit/change one color of light in a steady mode or a flashing mode to alert other traffic to their presence on the road, especially in an emergent circumstance. Furthermore the new portable light has the advantages of aesthetic appearance, electricity saving, higher brightness and longer lifetime.

In accordance with the invention there is provided a portable light to achieve the above object, in which the portable light comprises:
a case having an opening and attachment means for detachably securing on a bicycle;
a PCB assembly comprising a powering source installed in the case; a plurality of LEDs emitting light in different color which are installed on the PCB assembly and
electrically connected to the powering source and arranged to emit light through the opening of the case; and a lens disposed in the opening of the case for protecting the LEDs and enhancing the emitting of light through the opening of the case; and
wherein the PCB assembly controls current supplied to the LEDs such that one of the LED is lighted in a stead mode or a flashing mode. Preferably, the case is made of silicon.

In one embodiment of the invention, the lens is polished and transparent. Preferably, the lens is made of polycarbonate.

In accordance with the present invention, the PCB assembly comprises a control circuit installed therein, by means of which one of the LEDs can be controlled to emit single color of light and can be changed to emit light in other color. The control circuit is connected to the powering source and the LEDs. In one embodiment of the invention, the portable light includes two LEDs, and the control circuit of the portable light comprises two diodes connected in opposite direction to change the light. When one diode is connected with the powering source, one LED is illuminated, and the other diode is not connected with the powering source, and the other LED is not lighted. In another embodiment of the invention, the portable light may include three LEDs and three corresponding diodes. In another embodiment of the invention, the portable light may include four LEDs and four corresponding diodes. In yet another embodiment of the invention, the portable light may include five LEDs and five corresponding diodes.

In accordance with the present invention, the portable light further comprises a button mounted on the case which is electrically connected to the PCB assembly and can be manually controlled to independently control the LED to light in different color. In one embodiment of the invention, the button has a button back which is transparent and made of polycarbonate.

In accordance with the present invention, the powering source is rechargeable. Preferably the powering source is recharged by means of a USB cable.

In one embodiment of the invention, the powering source is a li-ion battery. The li-ion battery belongs to a secondary battery which has a long lifetime and other advantages. Preferably, the li-ion battery is secured on the battery bracket which is mounted on the PCB assembly and is covered by a bottom cover. In another embodiment of the invention, the battery bracket and the bottom cover are made of polycarbonate, rendering the battery bracket and the bottom cover being transparent.

The portable light of this invention can obtain different lighting effect base on its various colors of light emitting from various LEDs in the portable light. And the portable light of the invention can be easily operated to emit single color of light and can be easily operated to change other color of light in a steady mode or a flashing mode so as to alert other traffic to their presence on the road, especially in an emergent circumstance.

Furthermore the new portable light has the advantages of aesthetic appearance, electricity saving, higher brightness and longer lifetime.

### Brief Description of the Drawings

The features of the present invention may be clearly set forth with reference to the accompanying drawings. The invention, together with the advantages thereof may be best understood by reference to the following description taken in conjunction with the accompany drawings, wherein like reference signs identify like elements, and wherein:
FIG. 1 is an exploded view of the portable light according to the present invention;
FIG. 2 is a schematic view of the portable light according to the present invention;
FIG. 3 is a left side view of the portable light of FIG.2; and
FIG.4 is schematic view of diodes connection of the portable light according to the present invention.

### Detailed Description of the Invention

The structure of the portable light of the invention will be explained in detail with reference to the accompany drawings. The description and explanatory embodiments herein are merely used to set forth the present invention, not to limit the invention.

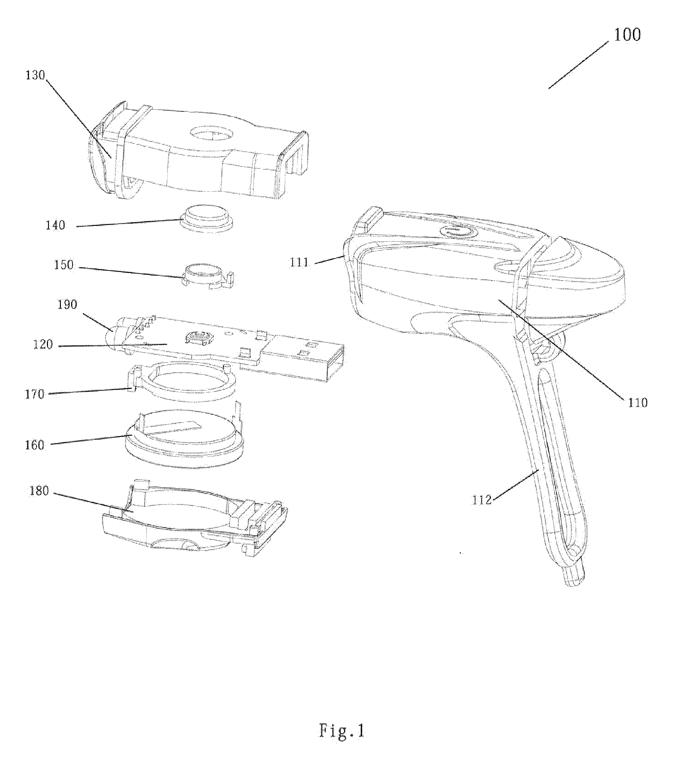

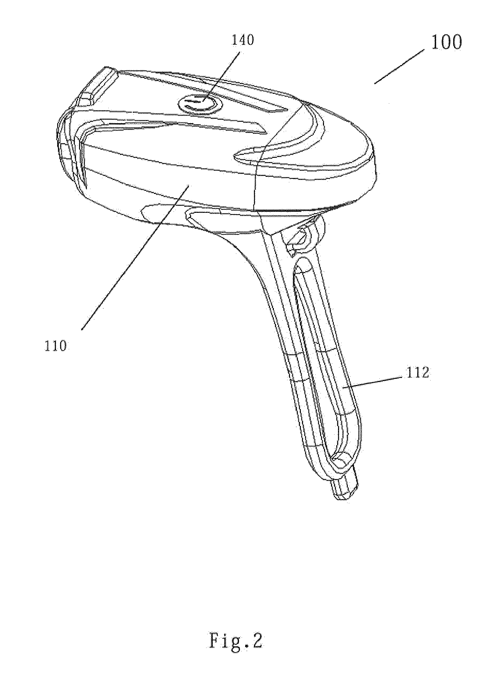

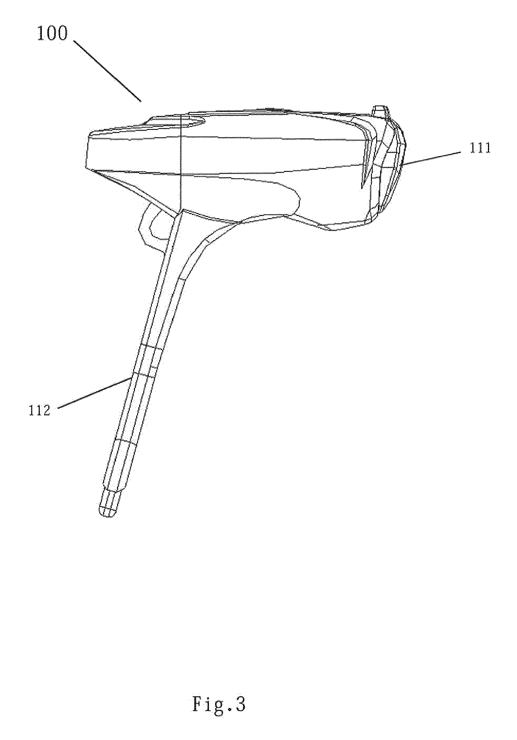

As illustrated in Fig.1-Fig.3, there is shown a portable light 100 of the invention which is a small portable consumer light product for use in sporting, outdoors, especially use for a bicycle. Simply speaking, the portable light 100 can be mounted anywhere of the bicycle, such as a handle bar of the bicycle.

The portable light 100 may comprise a case 110 which is made of silicon. The case 110 has an opening 111 and attachment means 112 for detachably securing on a bicycle. The case 110 may be made of other material, such as plastic or rubber.

The case 110 houses an inner portion of the portable light 100. More specifically, the inner portion may include a PCB assembly 120. The PCB assembly 120 is mounted in the case 110, which may comprise a PCB, internal circuits such as control circuit and drive circuit (not shown), a number of electronic components, ICs, battery contacts. And the inner portion may also include a lens 130, a button 140 and a button back 150, a plurality of LEDs 190 (two LEDs shown in the Fig.1) and a powering source.

In one embodiment of the invention, the powering source is a rechargeable battery such as a li-ion battery 160. And the battery 160 is secured on the battery bracket 170, which has a bottom cover 180 which can protect the battery 160. The battery 160 is electrically connected to the PCB assembly 120 via the battery contacts such as copper terminals. The li-ion battery is rechargeable by a USB cable, which can length the lifetime of the portable light 100.

The LEDs 190 emitting different color of light are installed on the PCB assembly 120 and electrically connected to the powering source and arranged to emit light through the opening 111 of the case 110. The number of the LEDs depends on the requirement of the consumer and the market, and each LED may emit a single light. In a preferable embodiment, the portable light 100 may have two LEDs.

The lens 130 is disposed in the case 110 for protecting the LEDs and enhancing the emitting of light through the opening 111 of the case 110. In one embodiment of the invention, the lens 130 is polished and transparent. Preferably, the lens 130 is made of polycarbonate. The LED light emanates through the lens part which provides a focused light projecting forward and a smaller percentage of light projecting sideways. This design may provide the bicycle rider with a good forward beam of light for "being seen".

The PCB assembly 120 controls current supplied to the LEDs such that one of the LED is lighted in a stead mode or a flashing mode. And if desired, another one LED in the portable light 100 can be easily operated to emit light in different color by means of adjusting the button 140 of the portable light 100. Preferably, the case 110 is made of silicon.

The PCB assembly 120 comprises a control circuit and a drive circuit installed therein, by means of which only one of the LEDs 190 can be controlled and driven to emit a single color of light. The control circuit is connected to the battery 160 and the LEDs 190. The drive circuit is normal which structure is omitted herein. And the control circuit is also normal except for the structure that independently controls the LEDs to emit light.

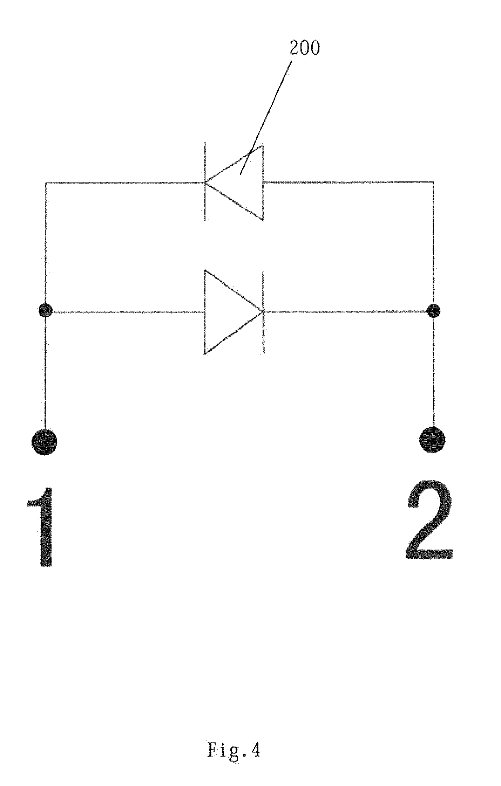

In one embodiment of the invention, the portable light 100 may include two LEDs, in which one emits white light and the other emits red light. And the control circuit of the portable light 100 may also comprise two diodes 200 connected in opposite direction as illustrated in Fig.4. When one diode 200 is connected with the powering source, one LED is illuminated, and the other diode 200 is not connected with the powering source, and the other LED is not lighted. Specifically, when a pin 1 is electrically connected to the battery 160, the portable light 100 emits white light; when a pin 2 is electrically connected to the battery 160, the portable light 100 emits red light.

In another embodiment of the invention, the portable light 100 may include three LEDs and three corresponding diodes. In another embodiment of the invention, the portable light may include four LEDs and four corresponding diodes. In another embodiment of the invention, the portable light may include five LEDs and five corresponding diodes.

The button 140 is mounted on the case 110 which is electrically connected to the PCB assembly 120 and can be manually controlled to independently control the LEDs 190. In one embodiment of the invention, the button 140 has a button back 150 which is transparent and made of polycarbonate. The button back 150 may protect the button 140.

The LEDs 190 have the ability to be flashed at a higher current than when constantly on. The skilled person in the art may know the structure of control circuit to adjust the current rate through the LEDs 190. Thus an LED can be lighted in a stead mode or a flashing mode in this invention.

The battery bracket 170 is used to fix the battery 160. When the battery 160 is disposed in the battery bracket 170, the battery 160 may fix tightly, and the bottom cover 180 is used to cover the battery 160 and the battery bracket 170.

In a preferable embodiment of the invention, the battery bracket 170 and the bottom cover 180 are made of polycarbonate, rendering the battery bracket 170 and the bottom cover 180 being transparent.

After the lens 130, the button 140, the button back 150, the PCB assembly 120, the battery 160, the battery bracket 170 and the bottom cover 180 are totally assembled, it may disposed in the case 110 to obtain the portable light 100 of the invention.

It can be seen that in the embodiment of the invention described there is provided an improved combination of structure, components and electronics to provide an effective small portable light. It will be obvious to those skilled in the art that changes and modifications can be made without departing from the true spirit and scope of the invention. It should be appreciated that all the embodiments of the present invention described above are illustrative only, and all the changes and modifications made by those skilled in the art are covered by the appended claims.

## Claims

1. A portable light for a bicycle comprising
a case having an opening and attachment means for detachably securing on a bicycle; a PCB assembly comprising a powering source installed in the case;
a plurality of LEDs emitting different colors of light which are installed on the PCB assembly and electrically connected to the powering source and arranged to emit light through the opening of the case;
a lens disposed in the opening of the case for protecting the LEDs and enhancing the emitting of light through the opening of the case; and
wherein the PCB assembly controls current supplied to the LEDs such that one of the LEDs is lighted to emit single color of light in a stead mode or a flashing mode.

2. The portable light for a bicycle according to claim 1, wherein the PCB assembly comprises a control circuit installed therein, by means of which one of the LEDs can be controlled to emit single color of light.

3. The portable light for a bicycle according to claim 2, wherein the portable light comprises two LEDs and the control circuit comprises two diodes connected in opposite direction to control the current so that the two LEDs can be easily operated to alternatively emit light in different color.

4. The portable light for a bicycle according to claim 1, wherein the portable light further comprises a button mounted on the case which is electrically connected to the PCB assembly and can be manually controlled to independently control the LED.

5. The portable light for a bicycle according to claim 4, wherein the portable light comprises a button back which is transparent and made of polycarbonate.

6. The portable light for a bicycle according to claim 1, wherein the powering source is rechargeable.

7. The portable light for a bicycle according to claim 6, wherein the powering source is rechargeable by means of a USB cable.

8. The portable light for a bicycle according to claim 6, wherein the powering source is a li-ion battery.

9. The portable light for a bicycle according to claim 8, wherein the portable light comprises a battery bracket which is mounted on the PCB assembly and the li-ion battery is secured on the battery bracket and is covered by a bottom cover.

10. The portable light for a bicycle according to claim 1, wherein the case is made of silicon and the lens is transparent and made of polycarbonate.
